(19) Europäisches Patentamt
European Patent Office
Office européen des brevets

(11) **EP 2 388 664 A1**

## (12) EUROPEAN PATENT APPLICATION

(43) Date of publication:
**23.11.2011 Bulletin 2011/47**

(51) Int Cl.:
***G05B 13/04*** (2006.01)     *G06Q 10/00* (2006.01)

(21) Application number: **10008152.0**

(22) Date of filing: **04.08.2010**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**
Designated Extension States:
**BA ME RS**

(30) Priority: **19.05.2010 EP 10005259**

(71) Applicant: **SIEMENS AKTIENGESELLSCHAFT**
**80333 München (DE)**

(72) Inventors:
• **Gilg, Albert, Professor**
**86916 Kaufering (DE)**
• **Paffrath, Meinhard, Dr.**
**85622 Feldkirchen (DE)**
• **Wever, Utz, Dr.**
**81539 München (DE)**

(54) **A method and a system for adjusting a design parameter of a complex system**

(57)     A method and a system for adjusting a design parameter of a complex system

The invention relates to a method and an apparatus for adjusting at least one design parameter of a complex system to an optimized design parameter value, wherein said optimized parameter value is computed by optimizing a stochastic moment e.g. the expectation value (E) or the variance (Var), of a selected objective function (f) being a linear combination of model functions (h) of a non-linear system model consisting of non-linear and linear model functions (h) of a number (n) of stochastic system parameters (x) and a number (m) of deterministic system parameters (x) of said system, each stochastic system parameter (x) having a finite parameter range defining a n-dimensional parameter space with $2^n$ parameter space corners,

wherein said expectation value (E) of said selected objective function (f) is optimized by calculating a polynomial approximation series of the expectation value (E) of said objective function (f) and a linear approximation of at least one selected constraint function (g) of said system model in the $2^n$ parameter space corners of said n-dimensional parameter space with respect to the stochastic system parameters (x) with a zero failure probability ($P_g$) of said constraint function (g) and combining the corner constraint values to a single penalty constraint.

FIG 4A

$$P(\vec{\mu}, \vec{\sigma}) \le \text{tol}, \vec{x} \in B(\mu, \sigma)$$

FIG 4B

$$P(\vec{\mu}, \vec{\sigma}) \le 0, \vec{x} \in B(\mu, \sigma)$$

EP 2 388 664 A1

**Description**

A method and a system for adjusting a design parameter of a complex system

Complex systems can comprise complex apparatuses, products but also complex processes such as chemical manufacturing processes. Most technical systems or processes such as chemical systems or processes, multi-body-systems or transport systems can be described by a model which allows an optimization of the respective system.

Manufacturing tolerances, scattering data and uncertain measurements introduce uncertainties into such a complex system. These uncertainties have to be considered in a design process of the system to provide a robust process or system. Accordingly, a robust optimization under constraints is of ungoing interest for technical applications. The demand for a robust design comes into play because manufacturing tolerances or scattering data have an impact or influence the operating point of the complex system. A robust optimization which considers also uncertainties implies considerable computational effort. In conventional systems the computation of chance constraints takes a lot of time in terms of function evaluations. Conventional methods like a Monte Carlo evaluation are therefore not suitable for computing failure probabilities of a technical system or process even more in a framework of an optimization procedure. There are known different methods for computation of failure probabilities such as FORM and SORM, but these methods still need a deterministic optimization problem to be solved.

Non-linear optimization which considers tolerances leads to an optimization of expectation values under chance constraints. Further, the numerical solution of these conventional methods is extremely complex because the evaluation of expectation values and chance constraints leads to sampling algorithms based on successive function evaluations. In case of complex systems such as aerodynamic systems or structural mechanics the sampling leads to execution run times which are not acceptable.

Accordingly, it is an object of the present invention to provide a method and a system for adjusting the design parameters of a complex systems to an optimized design parameter value comprising a low execution run time for calculating the respective design parameter value.

This object is achieved by a method comprising the features of claim 1.

Accordingly, the invention provides a method for adjusting at least one design parameter of a complex system to an optimized design parameter value, wherein said optimized parameter value is computed by optimizing the expectation value of a selected objective function being a linear combination of model functions of a non-linear system model consisting of non-linear and linear model functions of a number of stochastic system parameters of said system, each stochastic system parameter having a finite parameter range defining a n-dimensional parameter space with $2^n$ parameter space corners, wherein said expectation value of said selected objective function is optimized by calculating a polynomial approximation series of the expectation value of said objective function and a linear approximation of at least one selected constraint function of said system model in the $2^n$ parameter space corners of said n-dimensional parameter space with respect to the stochastic system parameters with a zero failure probability of said constraint function and combining the corner constraint values to a single penalty constraint.

In a possible embodiment of the method according to the present invention the expected value of the selected objective function is performed by optimizing a surrogate objective function which is derived from function values of that objective function and surrogate constraint function of the selected constraint functions.

In a possible embodiment of the method according to the present invention each of the stochastic system parameters of the system comprises a compact probability distribution.

In a possible embodiment of the method according to the present invention the compact probability distribution is fitted to measured data of the respective stochastic system parameter.

In a possible embodiment of the method according to the present invention the compact probability distribution comprises a uniform distribution.

In a further possible embodiment of the method according to the present invention the compact probability distribution comprises a beta distribution.

In a still further embodiment of the method according to the present invention the compact probability distribution comprises a truncated Gaussian distribution.

In an embodiment of the method according to the present invention the non-linear system model is loaded from a data storage storing the non-linear system model.

In an embodiment of the method according to the present invention the non-linear system model stored in the data storage is a static non-linear system model.

In a further possible embodiment of the method according to the present invention the loaded non-linear system model is a dynamic non-linear system model.

In a possible embodiment of the method according to the present invention the method is provided for adjusting at least one design parameter of a complex apparatus.

In an alternative embodiment of the method according to the present invention the method is provided for adjusting at least one design parameter of a complex process.

In an embodiment of the method according to the present invention said polynomial approximation series is formed by a Taylor series.

In a possible embodiment of the method according to the present invention the surrogate objective function is generated by means of a moving Least Square approximation from the function values of the objective function.

In a possible embodiment of the method according to the present invention the surrogate objective function is optimized until at least one predetermined configurable convergence criterion is met.

In a possible embodiment of the method according to the present invention the surrogate objective function is formed by a polynomial function.

The invention further provides a method for creating a robust design for a complex system based on non-linear optimization, wherein the method comprises the steps of:

> providing a non-linear system model of said complex system; deriving adequate system parameters, parameter tolerances and constraints regarding the complex system;
> performing an optimization of the non-linear system model by taking into account the derived system parameters, parameter tolerances and constraints; and
> providing the optimal robust design of the complex system, wherein said robust design considers the parameter tolerances and constraints.

The invention further provides a system for adjusting at least one design parameter of a complex system to an optimized design parameter value comprising the features of claim 14.

Accordingly, the invention provides a system for adjusting at least one design parameter of a complex system to an optimized parameter value, wherein said optimized parameter value is computed by optimizing the expectation value of the selected objective function being a linear combination of model functions of a non-linear system model consisting of non-linear and linear model functions of a number of stochastic system parameters of said system, each stochastic system parameter having a finite parameter range defining a n-dimensional parameter space with $2^n$ parameter space corners, wherein said expectation value of said selected objective function is optimized by calculating a polynomial approximation series of the expectation value of said objective function and a linear approximation of at least one selected constraint function of said system model in the $2^n$ parameter space corners of said n-dimensional parameters space with respect to the stochastic system parameters with a zero failure probability of said constraint function and combining the corner constraint values to a single penalty constraint.

The invention further provides a device for creating a robust design for a complex system based on non-linear optimization, wherein the device comprising:

> a modelling unit for providing a non-linear system model, wherein adequate system parameters, parameter tolerances and constraints regarding the complex system are derived;
> a processing unit for performing an optimization to the non-linear system model by taking into account the derived system parameters, parameter tolerances and constraints; and an output unit for providing the optimal robust design of the complex system,
> wherein said robust design considers the parameter tolerances and constraints.

In the following possible embodiments of the method and system for adjusting at least one design parameter of a complex system to an optimized design parameter value are described with reference to the enclosed figures.

Fig. 1      shows a flowchart of a possible embodiment of a method for creating a robust design for a complex system based on non-linear optimization according to the present invention;

Fig. 2      shows a block diagram of a possible embodiment of an apparatus for creating a robust design for a complex system based on non-linear optimization according to the present invention;

Figs. 3A-3D      show diagrams for illustrating the present invention;

Figs. 4A, 4B      show diagrams for illustrating the present invention.

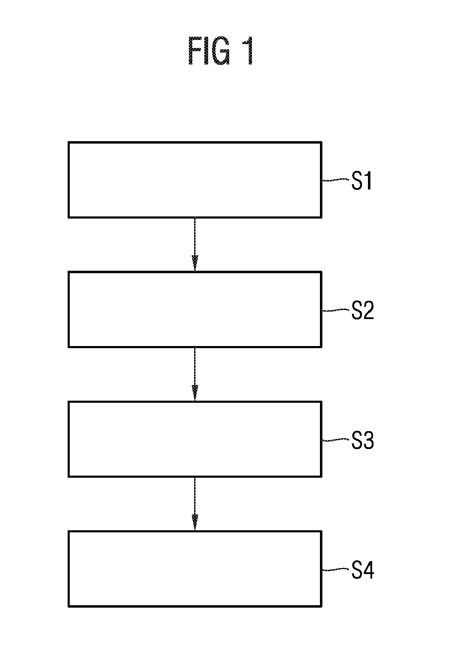

As can be seen from Fig. 1 a method for creating a robust design for a complex system based on non-linear optimization can comprise several steps. In a first step S1 a non-linear system model of a complex system can be provided. The complex system can be formed by a complex apparatus such as multi body system or a transport system or by a complex process such as a manufacturing process or operation process. The complex system is described by a system model comprising several model functions h of a number n of stochastic system parameters x of the system.

The non-linear model H of the system can comprise linear but also non-linear model functions h of a predetermined number n of the stochastic system parameters x of the respective system. Each stochastic system parameter has a finite parameter range so that a n-dimensional parameter space with $2^n$ parameter space corners is defined.

The linear and non-linear model functions h can be conventional functions of the stochastic system parameters. In a possible embodiment some of the model functions h are derived from differential equations describing the complex system. The non-linear system model can be stored in a data storage and be loaded by a processing unit for performing an optimization of a design parameter of the complex system. For many complex systems it is possible to load a system model from a data base. For example when optimizing a circuit element of an integrated chip the system model of a chip circuit element such as a MOSFET can be loaded from a data base. In a possible embodiment a modelling unit is provided for creating a non-linear system model of the respective complex system. For example based on measured data taken from a prototype a model of the respective system can be created.

In a possible embodiment the non-linear system model stored in the data storage or loaded from a database is a static non-linear system model. Alternatively, the non-linear system model is a dynamic non-linear system model changing over time.

In a further step S2 adequate parameters, parameter tolerances and constraints g regarding the complex system are derived. The parameters of the system are stochastic system parameters each having a finite parameter range comprising a compact probability distribution. The compact probability distribution can be for example a uniform distribution. In an alternative embodiment the stochastic system parameters of the system can comprise a beta distribution.

In still a further possible embodiment some of the stochastic system parameters can comprise a truncated Gaussian distribution.

In a possible embodiment all stochastic system parameters x of the system comprise the same kind of compact probability distribution. It is also possible that the stochastic system parameters x of the system comprise different kinds of compact probability distributions such as a uniform distribution, a beta distribution or a truncated Gaussian distribution. The parameters of the system form scattering data and can be described by stochastic variables. In a possible embodiment the compact probability distribution of a system parameter x is known. In an alternative embodiment the compact probability distribution of a stochastic system parameter x is determined. In a possible embodiment the compact probability distribution is determined by being fitted to measured data to the respective stochastic system parameter x.

In a further step S3 an optimization of the non-linear system model is performed by taking into account the derived system parameters, parameter tolerances and system constraints. With the method according to the present invention at least one design parameter of the complex system is adjusted to an optimized design parameter value. For example considering a diode modelling a MOSFET channel the optimization problem can reside in minimizing a channel length L of the MOSFET or to maximize the available power. A possible constraint g can be a leakage current I of the MOSFET. Furthermore, uncertainties have to be considered in both the channel length L and the channel doping. Since the current is a function of the channel parameters the current is also afflicted with these uncertainties. According to the present invention an optimized parameter value is computed by optimizing an expectation value E of at least one selected objective function f. The selected objected function f can be a linear combination of model functions h of the non-linear system model H. The non-linear system model H can consist of non-linear and linear model functions h of the number n of stochastic system parameters x of the respective complex system. In a possible embodiment the objective function f is selected from one of the model functions h of the non-linear system model H. For example, the model function can be a function indicating the dependency of the channel length L of a MOSFET channel of other system parameters such as channel doping or temperature. In this simple example the complex system is a MOSFET being modelled by a diode. With the method according to the present invention the expectation value E of the selected objected function f is optimized in step S3 by calculating a polynomial approximation series of the expectation value E of the objective function f and a linear approximation of at least one selected constraint function g of the system model H in the $2^n$ parameter space corners of the n-dimensional parameter space with respect to the stochastic system parameters x.

The method according to the present invention a zero failure probability Pg of the constraint function g is assumed. A polynomial approximation series of the expectation value E of the objective function f and a linear approximation of at least one selected constraint function g of the system model $2^n$ parameter space corners of the n-dimensional parameter space is calculated with respect to the stochastic system parameters x with a zero failure probability Pg of the constraint function g and the corner constraint values are combined to a single penalty constraint. In a possible embodiment the polynomial approximation series can be formed by a Taylor series. In the method according to the present invention the probability can replaced by a zero probability condition. Furthermore, a zero probability of failure changes the solution of the robust optimization problem only very little. This simplification allows a deterministic two stage optimization. The constraints g are linearized with respect to the stochastic parameters, thus the minimum of the constraints are on the boundary of the n-dimensional parameter space. This simplification only slightly change the solution of the technical problem because the tolerances are small in general and thus the linearization is accurate.

In a possible embodiment optimizing the expected value E of the selected objective function f is performed by optimizing a surrogate objective function f' which is derived from function values of the objective function f and surrogate constraint functions of the selected constraint functions g. In a further embodiment the surrogate objective function f' is generated by means of a moving least square MLS approximation from the function values of the objective function f. In a possible embodiment the surrogate objective function f' is optimized until at least one predetermined or configured convergence criterion is met. The surrogate objective function f' can be formed by a polynomial function P.

The nonlinear optimization problem with deterministic design parameters has the following form:

$$\text{Minimize } f\left(\vec{x}\right) \qquad (1)$$
$$g_i\left(\vec{x}\right) \geq 0, \qquad i = 1,...,m$$

where $\left(\vec{x}\right) \in R^n$ are the design parameters and $f$ and $g$ are linear or nonlinear functions:

$$f : R^n \rightarrow R$$
$$\vec{x} \mapsto f\left(\vec{x}\right)$$
$$g_i : R^n \rightarrow R$$
$$\vec{x} \mapsto g_i\left(\vec{x}\right) \qquad i = 1,...,m$$

For practical applications the design parameters are scattering data and thus can be described by stochastic variables. In the following $\overline{X}$ is a vector of continuous stochastic input variables with analytically given density, mean $\overline{\mu}$ and standard deviation $\overline{\sigma}$. In the following the case of independent stochastic input variables is considered though the proposed method can also be applied for more general cases. For dependent normal random variables with covariance matrix V, a linear transformation $\overline{X} = T_L\overline{X}_0$ from $\overline{X}$ to an independent standard normal vector $\overline{X}_0$ can be applied, with $T_L$ given by the Cholesky decomposition of V. For the general case of dependent mixed normal and non-normal stochastic variables, there is no exact transformation available. As approximation the nonlinear Rosenblatt-transformation $\overline{X} = T(\overline{X}_0)$ can be applied. One can consider the following chance-constrained optimization problem:

$$\text{Minimize } S\left(f, \vec{\mu}, \vec{\sigma}\right) \qquad (2)$$
$$P\left(g_i, \vec{\mu}, \vec{\sigma}\right) \leq \epsilon_i, \qquad i = 1,...,m$$

with design parameters $\overline{\mu}$ $\overline{\sigma}$, and failure probabilities

$$P\left(g_i, \vec{\mu}, \vec{\sigma}\right) = \int_{g_i\left(\vec{x}\right) \leq 0} p\left(\vec{x}, \vec{\mu}, \vec{\sigma}\right) d\vec{x} \qquad i = 1,...,m \qquad (3)$$

In this context $\overline{x}$ denotes a realization of $\overline{X}$, and $p$ the joint probability density function of $\overline{X}$. Usually the objective function $S(f,\overline{\mu},\overline{\sigma})$ is the mean value of $f$:

$$S(f, \vec{\mu}, \vec{\sigma}) := E(f, \vec{\mu}, \vec{\sigma}) = \int_{\Omega(\vec{\mu}, \vec{\sigma})} f(\vec{x}) p(\vec{x}, \vec{\mu}, \vec{\sigma}) d\vec{x}$$

Annother possibility is the minimize the variance of the systen:

$$S(f, \vec{\mu}, \vec{\sigma}) := Var(f, \vec{\mu}, \vec{\sigma}) = \int_{\Omega(\vec{\mu}, \vec{\sigma})} (f(\vec{x}) - E)^2 \, p(\vec{x}, \vec{\mu}, \vec{\sigma}) d\vec{x} \qquad (4)$$

where $\Omega(\overline{\mu}, \overline{\sigma})$ is the support of the stochastic density $p$. The optimization problem (2) is then the stochastic counterpart of the deterministic problem (1).

Equation (2) denotes the most general formulation for a stochastic optimization problem. It can be solved by using the polynomial chaos expansion for the representation of stochastic variables.

In order to decrease the computational effort for the solution of the stochastic optimization problem (2), one can make the following assumptions:

- The chance constraints are replaced by absolute reliability constraints.
- The design parameters comprise a compact support of the distribution.

Both assumptions are realistic. In praxis the failure probability is very small, thus it can replaced by a absolute reliability constraint without significantly changing the solutions. In technical applications the appearing stochastic distributions have compact support. The parameters can comprise a uniform distribution. Following the first assumption, the chance constraints

$$P(g_i, \vec{\mu}, \vec{\sigma}) \le \epsilon_i, \qquad i = 1, \ldots, m \qquad (5)$$

are replaced by absolute reliability constraints

$$P(g_i, \vec{\mu}, \vec{\sigma}) = 0, \qquad i = 1, \ldots, m \qquad (6)$$

Using the compact support assumption $\Omega(\overline{\mu}, \overline{\sigma})$ the failure probabilities (3) have the form

$$P_i := P(g_i, \vec{\mu}, \vec{\sigma}) = \int_{\Omega_{g_i}(\vec{\mu}, \vec{\sigma})} p(\vec{x}, \vec{\mu}, \vec{\sigma}) d\vec{x} \qquad i = 1, \ldots, m \qquad (7)$$

with

$$\Omega_{g_i}(\vec{\mu}, \vec{\sigma}) := \{\vec{x} | g_i(\vec{x}) \le 0 \wedge \vec{x} \in \Omega(\vec{\mu}, \vec{\sigma})\}$$

Equivalent to (6) are the constraints

$$\min_{\vec{x} \in \Omega(\vec{\mu}, \vec{\sigma})} g_i(\vec{x}) \geq 0 \qquad i = 1, \ldots, m$$

$$(8)$$

(8) defines a function $g_i(\overline{\mu}, \overline{\sigma})$ such that (8) can be written as $\overline{g}_i(\overline{\mu}\overline{\sigma}) \geq 0$

Absolute reliability constraints are computationally easier manageable than chance constraints in the sense that no evaluation of multi-dimensional integrals in peripheral regions is required. Furthermore they only depend on the support $\Omega(\overline{\mu}, \overline{\sigma})$ of the stochastic distribution, not on the stochastic distributions themselves. In general it is a diffult task to solve nonlinear semi-infinite programming problems because there may be several local minima or a solver can jump from one to the other minimum. In a possible embodiment one can use a standard SQP solver. With the above assumptions, the optimization problem (1) can be transferred to the following multistage optimization problem:

$$\text{Minimize} \quad S(f, \vec{\mu}, \vec{\sigma}) \qquad (10)$$

$$\min_{\vec{x}} \ g_i(\vec{x}) \geq 0, \qquad i = 1, \ldots, m$$

Critical for the convergence of the proposed multi-step method is the convergence of the first step. Assume for simplicity that all components of $\overline{\mu}$ are design variables and all components of $\overline{\sigma}$ are fixed, and that there is a solution $\overline{x}^*$ of the corresponding deterministic problem.

The two-stage optimization (10) problem is less complex than the general nonlinear stochastic problem (2) but it is still significantly more complex than the corresponding deterministic problem (1). In order to obtain an efficient algorithm the further simplifications are used:

- The objective functions f is replaced by a quadratic Taylor expansion around the expectation value E; and
- The constraints $g_i$, $i=1,\ldots,m$ are linearized with respect to the stochastic parameters.

Both expansions introduce only small errors because the tolerances are small in general.

The quadratic Taylor expansion of the objective function f is given by

$$f(x_1, \ldots, x_n) \approx f(\vec{\mu}) + g^T(\vec{x} - \vec{\mu}) + (\vec{x} - \vec{\mu})^T h(\vec{x} - \vec{\mu}) \qquad (11)$$

with the gradient and the hessian h* given by

$$g = \frac{\partial f}{\partial x_i}(\mu_1, \ldots, \mu_n)$$

$$h^* = \frac{1}{2} \frac{\partial^2 f}{\partial x_i \partial x_j}(\mu_1, \ldots, \mu_n)$$

Using the definitions of moments, the expectation value $E[f(x_1 \ldots x_n)]$ can be computed easily:

$$E\left[f(\vec{x}, \vec{\mu}, \vec{\sigma})\right] = \int_\Omega f(\vec{x}) p(\vec{x}, \vec{\mu}, \vec{\sigma}) dx \approx f(\vec{\mu}) + \sum_{1 \leq i \leq n} h_{ii} \sigma_i^2 \qquad (12)$$

The constraints $g_i$ are linearized by

$$g_i(x_1,\ldots,x_n) \approx g_i(\vec{\mu}) + \sum_{1 \le j \le n} \frac{\partial g_i}{\partial x_j}(\vec{\mu})(x_j - \mu_j)$$

$$(13)$$

Inserting (13) and (12) into the multistage optimization (10) and taking into account that the minimum of a linear function must lie in the edges of the compact parameter space $\Omega$, the arising optimization problem reads:

$$\text{Minimize} \quad f(\vec{\mu}) + \sum_{1 \le i \le n} h_{ii}\sigma_i^2 \qquad (14)$$

$$g_i(\vec{\mu}) + \sum_{1 \le j \le n} \frac{\partial g_i}{\partial x_j}(\vec{\mu})(x_j^k - \mu_j) \ge 0, \qquad i = 1,\ldots,m, \qquad k = 1,\ldots,2^n$$

The optimization problem (14) is no longer a two stage problem, but the number of constraints (14) increase exponentially with the number n of the variables. Thus, a penalty function is introduced:

$$\xi(x) = \begin{cases} x - 0.5\lambda x^2, & x\langle \frac{1}{\lambda} \\ \dfrac{1}{2\lambda}, & x \le \frac{1}{\lambda} \end{cases} \qquad (15)$$

With the further definition of

$$\tilde{g}_i\left(\vec{x}^k\right) = g_i(\vec{\mu}) + \sum_{1 \le j \le n} \frac{\partial g_i}{\partial x_j}(\vec{\mu})(x_j^k - \mu_j)$$

$$(16)$$

the optimization problem (14) reads:

$$\text{Minimize} \quad f(\vec{\mu}) + \sum_{1 \le i \le n} h_{ii}\sigma_i^2 \qquad (17)$$

$$\frac{1}{2^n} \sum_{1 \le k \le 2^n} \xi\left(\tilde{g}_i\left(\vec{x}^k\right)\right) \ge 0, \qquad i = 1,\ldots,m$$

The nonlinear robust optimization problem (17) can be solved in a possible embodiment by Sequential Quadratic Programming (SQP). It is possible that the objective function f and the constraints g are computed by black box software (CFD, FEM) and thus no gradient information are available. Therefore, a response surface method can be employed. The basic method is the moving leastsquare (MLS) algorithm. Given discrete points

$$\left(\vec{x}_i, f_i\right) \qquad i = 1, \ldots, n$$

The moving least square (MLS) method solves a weighted least square for each function evaluation:

$$\min_{c(\vec{x})} \sum_{i=1}^{n} \Theta\left(\vec{x} - \vec{x}_i\right) \left\| P\left(\left(\vec{x}_i, c(\vec{x})\right)\right) - f_i \right\|^2$$

where $\Theta(\bar{x} - \bar{x}_i)$ is a weighting function.

$$\Theta\left(\vec{x} - \vec{x}_i\right) = \exp\left(-\frac{\left\|\vec{x} - \vec{x}_i\right\|^2}{\in^2}\right) \quad \text{or} \quad \Theta\left(\vec{x} - \vec{x}_i\right) = \frac{1}{\left\|\vec{x} - \vec{x}_i\right\|^2 + \in^2}$$

The function evaluation takes place by

$$f\left(\vec{x}\right) = P\left(c\left(\vec{x}\right)\right)$$

that is, for each evaluation a weighted least square has to be solved in order to obtain the polynomial coefficients $c(\bar{x})$. The generated manifold is smooth, thus the derivatives of $P(c(\bar{x}))$ may be determined.

The moving least square algorithm can be used very efficiently to solve the robust optimization problem (17). The necessary derivatives of the objective function $f$ and the constraints $g_i, i, \ldots, m$ are computed by the moving least square. Using this interaction for solving (17) a high efficient robust optimizer is provided. The number of function evaluations for solving the robust problem is similar to those of solving (1).

The performance of the method can be demonstrated on a very simple example:

$$\min \quad x_1^2 + x_2^2 \quad \text{w.r.t} \quad x_2 - x_1^2 + 1 \le 0 \tag{18}$$

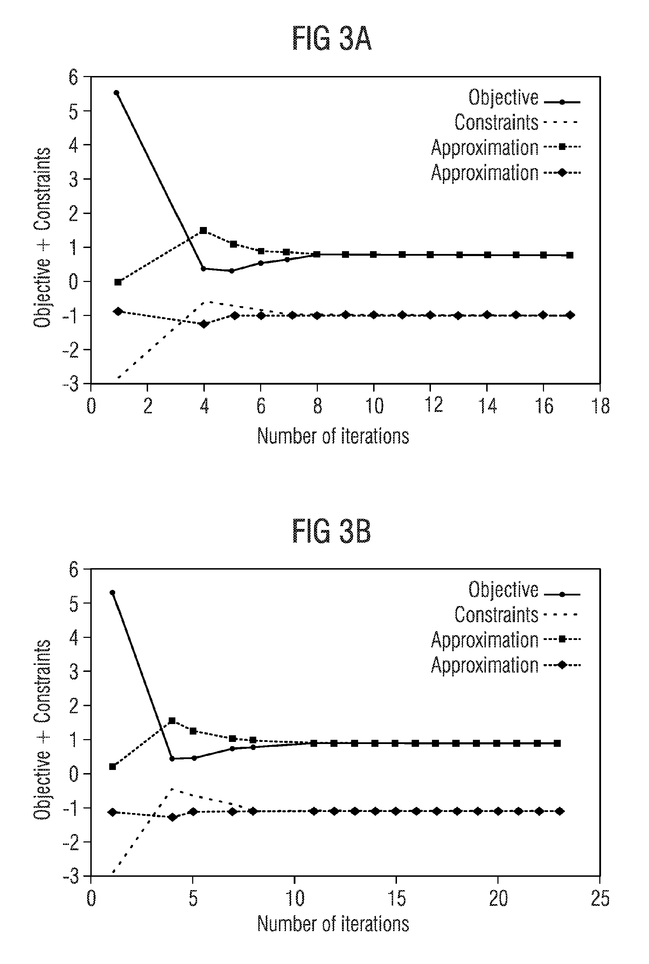

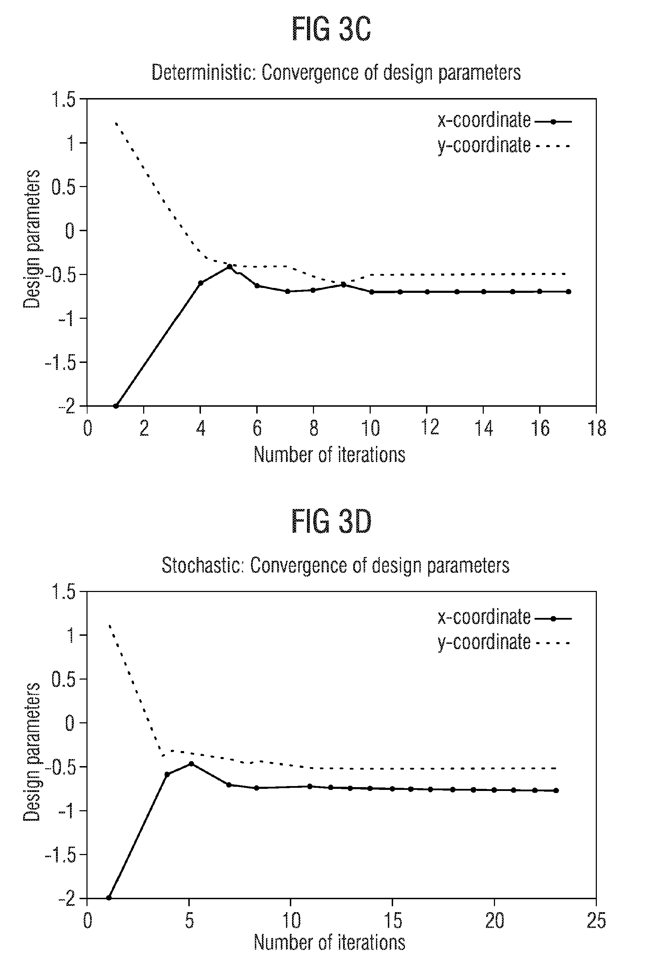

The tolerances for the design parameter are given by $\sigma_1 = 0.02$ and $\sigma_2 = 0.07$. The solution of problem (18) is presented in Figure 3.

Figures 3a, 3b show the convergence of the objective and the constraint. Additionally the convergence of the moving least square approximation can be observed. Figures 3c, 3d show the convergence of two design parameters $x_1$, $x_2$. Figures 3a, 3c show a deterministic case whereas Fig. 3b, 3d show a stochastic case.

The robust optimization method needs a similar number of function evaluations than the deterministic case.

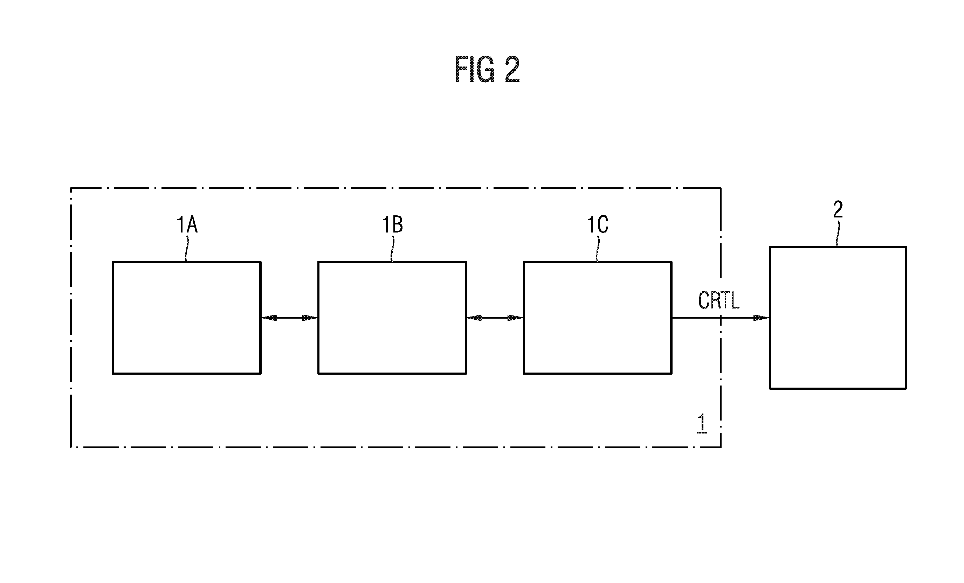

Fig. 2 shows a block diagram of a device 1 for performing a robust design for a complex system 2 based on non-linear optimization. In the embodiment shown in Fig. 2 the device 1 comprises a modelling unit 1A for providing a non-linear system model. The modelling unit 1A provides the non-linear system model wherein adequate parameters, e.g. system parameters, parameter tolerances and constraints regarding the complex system 2 are derived. The complex system 2 can be any complex system or process. The non-linear system model H can consist of non-linear and linear model functions h. Each function h is a function of a number n of the stochastic system parameters x of the respective system 2. The modelling unit 1A can comprise a data storage for storing the non-linear system model H. Furthermore, the modelling unit 1A can comprise a wireless or wired interface for loading the non-linear system model H of the system 2 from a data base or a data carrier.

The device 1 further comprises a processing unit 1B for performing an optimization to the non-linear system model H by taking into account the derived parameters, parameter tolerances and constraints g. The processing unit 1B can comprise one or several microcontrollers.

The device 1 further comprises an output unit 1C providing the optimal robust design of the complex system 2. The robust design considers the parameter tolerances and constraints.

The modelling unit 1A, the processing unit 1B and the output unit 1C can be integrated in the same apparatus 1, however it is also possible that the modelling unit 1A, the processing unit 1B and the output unit 1C from separate entities which are connected via data links by a wireless or wired network. The robust design output by the output unit 1C can either directly influence the system 2 or can be stored in a storage unit for further use.

The method and system according to the present invention can be applied of a wide range of systems. With the method and system according to the present invention it is possible to solve robust optimization problems under constraints for complex multi physics problems. These optimizations are important e.g. in the fields of aerodynamics, structural mechanics and electromagnetism.

For example, the method and system according to the present invention can be employed to optimize a turbocharger:

The corresponding optimization problem can be stated as follows:

Minimize inerta,
while

stress S is kept below a given upper bound $S_{up}$ and first modal frequency f is greater than flow.

In the given example the inertia parameter can be the blade thickness parameters. The blade can not be produced arbitrarily exact especially in a milling process, so there are production tolerances in the thickness parameters which have to be considered in the optimization of a blade. In this example the moment of inertia is minimized while limiting the smallest modal frequency. The selected design task can comprise to minimize stress in a prescribed region. Further an aerodynamic optimization for a range of mass flows can be performed while limiting the stress. Another possible design task can be to minimize a temperature in a prescribed region by limiting the stress.

A further possible application of the method and system according to the present invention includes the dimensioning of a robust control unit or controller, for example optimizing a PID controller.

A further possible application of the method and system according to the present invention is to create a portfolio structure, e. g. a stock portfolio, which guarantees a maximal investment hurdle rate regarding to unsecure market scenarios.

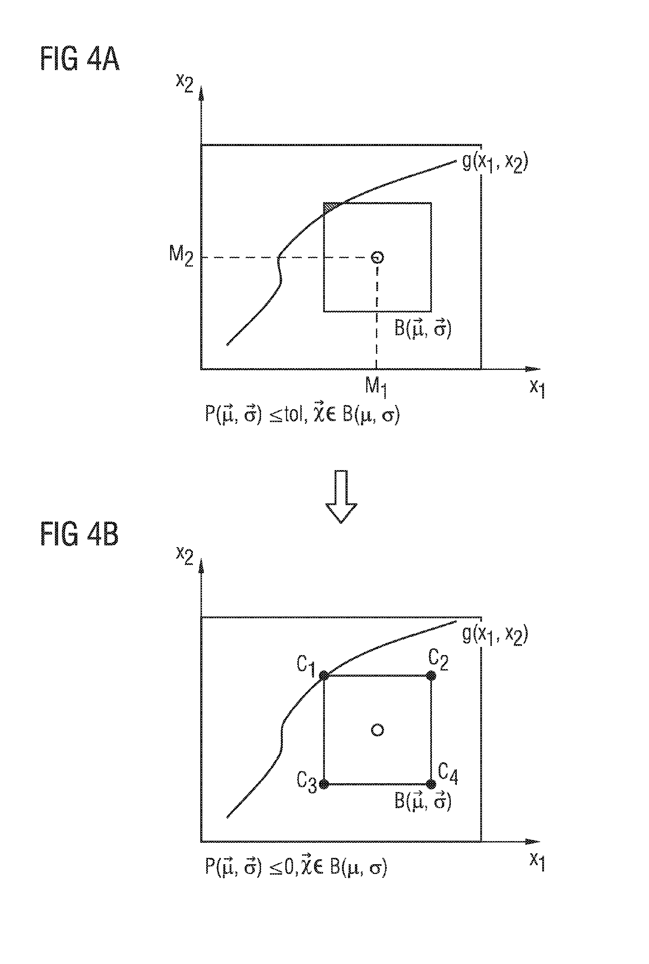

Figs. 4A, 4B are provided to illustrate the method and system according to the present invention. In this simple example the system only comprises two stochastic system parameters x1, x2. The constraint function g(x1, x2) indicating the border between failure and no failure. Because of tolerances and scattering influences most stochastic parameters x1, x2 can vary around an average value $\mu$l, $\mu$2 in an area B shown in Fig. 4A. As can be seen Fig. 4A in the upper left corner of the are B there is a small area which lies beyond the border defined by the constraint function g(x1, x2). The device of the small area indicates a probability for failure of the system.

With the method and system according to the present invention an optimization of the expectation value E(f, $\mu$, $\sigma$) with $P_g \leq 0$ ($\mu$,$\sigma$)$\leq$*tol,* i=1,...,m is reduced to the optimization problem as shown in Fig. 4B by assuming that the tolerance is zero, i.e. that the failure probability is zero. $P_g(x) \leq 0$.

With use of zero probabilities only a deterministic minimization problem must be solved and no sampling is required. The conventional optimization problem shown in Fig. 4A can be transformed into the optimization problem shown in Fig. 4B. In the given example there are two stochastic system parameters x1, x2, i.e. the number n of stochastic parameters n=2. The two stochastic system parameters x1, x2 have a finite parameter range defining a two-dimensional parameter space having $2^2$=4 parameter space corners c1, c2, c3, c4 as shown in Fig. 4B.

In the method and system according to the present invention not only a general zero probability chance constraint is assumed but also a linearization of the constraint g around the expectation value is performed:

The minimum of the linear function at the edges or corners of the region B:

$$\text{Min} \quad g_i\!\left(\vec{\mu}\right) + \sum_{j=1}^{n} \frac{\partial g_i}{\partial x_j}(\vec{\mu})(x_j^k - \mu_j) \geq 0, \vec{x} \in B(\vec{\mu}, \vec{\sigma}), i = 1, ..., m, k = 1, ..., 2^n$$

With the method and system according to the present invention the minimization problem is transferred to conditions for discrete values.

With the method according to the present invention the results are only marginally influenced. The linearization of the constraint is possible since the tolerances of the designed parameters are in general small thus the corresponding random space or n-dimensional parameter space is small. The method according to the present invention needs a similar number of function calls as a deterministic method thus reducing the time for calculating optimized design parameter values significantly.

**Claims**

1.  A method for adjusting at least one design parameter of a complex system to an optimized design parameter value, wherein said optimized parameter value is computed by optimizing a stochastic moment comprising the expectation value (E) or the variance (Var) of a selected objective function (f) being a linear combination of model functions (h) of a non-linear system model consisting of non-linear and linear model functions (h) of a number (n) of stochastic system parameters (x) and of a number (m) of deterministic system parameters (x) of said system, each stochastic system parameter (x) having a finite parameter range defining a n-dimensional parameter space with $2^n$ parameter space corners,
    wherein said expectation value (E) of said selected objective function (f) is optimized by calculating a polynomial approximation series of the expectation value (E) of said objective function (f) and a linear approximation of at least one selected constraint function (g) of said system model in the $2^n$ parameter space corners of said n-dimensional parameter space with respect to the stochastic system parameters (x) with a zero failure probability ($P_g$) of said constraint function (g) and combining the corner constraint values to a single penalty constraint.

2.  The method according to claim 1,
    wherein optimizing the expected value (E) of the selected objective function (f) is performed by optimizing a surrogate objective function (f) which is derived from function values of said objective function (f) and surrogate constraint functions of the selected constraint functions (g).

3.  The method according to claims 1 or 2,
    wherein each of the stochastic system parameters (x) of said system comprises a compact probability distribution.

4.  The method according to claim 3,
    wherein said compact probability distribution is fitted to measured data of the respective stochastic system parameter (x).

5.  The method according to claims 3 or 4,
    wherein said compact probability distribution comprises a uniform distribution, or
    a beta distribution, or
    a truncated Gaussian distribution.

6.  The method according to claims 1-5,
    wherein said non-linear system model is loaded from a data storage storing said non-linear system model.

7.  The method according to claims 1-6,
    wherein said non-linear system model is a static or a dynamic non-linear system model.

8.  The method according to claims 1-7,
    wherein said complex system is a complex apparatus or a complex process.

**9.** The method according to claims 1-8,
wherein said polynomial approximation series is formed by a Taylor series.

**10.** The method according to claims 2-9,
wherein said surrogate objective function (f') is generated by means of a moving Least Square (MLS) approximation from the function values of said objective function (f).

**11.** The method according to claims 2-10,
wherein said surrogate objective function (f') is optimized until at least one predetermined convergence criterion is met.

**12.** The method according to claims 2-11,
wherein said surrogate objective function (f') is formed by a polynomial function (P).

**13.** A method for creating a robust design for a complex system (2) based on non-linear optimization,
said method comprising the steps of:

(a) providing (S1) a non-linear system model of said complex system (2);
(b) deriving (S2) adequate system parameters, parameter tolerances and constraints regarding the complex system (2);
(c) performing (S3) an optimization of the non-linear system model by taking into account the derived system parameters (x), parameter tolerances and constraints (g); and
(d) providing (S4) the optimal robust design of the complex system (2), wherein said robust design considers the parameter tolerances and constraints (g).

**14.** A system for adjusting at least one design parameter of a complex system (2) to an optimized design parameter value, wherein said optimized parameter value is computed by optimizing a stochastic moment comprising the expectation value (E) or the variance (Var) of the selected objective function (f) being a linear combination of the model function (h) of a non-linear system model consisting of non-linear and linear model functions (h) of a number (n) of stochastic system parameters (x) and a number (m) of deterministic system parameters (x) of said system,
each stochastic system parameter (x) having a finite parameter range defining a n-dimensional parameter space with $2^n$ parameter space corners,
wherein said expectation value (E) of said selected objective function (f) is optimized by calculating a polynomial approximation series of the expectation value (E) of said objective function (f) and a linear approximation of at least one selected constraint function (E) of said system model in the $2^n$ parameter space corners of said n-dimensional parameters space with respect to the stochastic system parameters (x) with a zero failure probability ($P_g$) of said constraint function(g) and combining the corner constraint values to a single penalty constraint.

**15.** A device (1) for creating a robust design for a complex system (2) based on non-linear optimization,
the device (1) comprising:

(a) a modelling unit (1A) for providing a non-linear system model,
wherein adequate system parameters (x), parameter tolerances and constraints (g) regarding the complex system (2) are derived;
(b) a processing unit (1B) for performing an optimization to the non-linear system model by taking into account the derived system parameters (x), parameter tolerances and constraints (g); and
(c) an output unit (1C) for providing the optimal robust design of the complex system (2),
wherein said robust design considers the parameter tolerances and constraints (g).

# FIG 1

S1

S2

S3

S4

# FIG 2

EP 2 388 664 A1

## FIG 3A

## FIG 3B

# FIG 3C

Deterministic: Convergence of design parameters

# FIG 3D

Stochastic: Convergence of design parameters

FIG 4A

$$P(\vec{\mu}, \vec{\sigma}) \leq tol, \vec{x} \in B(\mu, \sigma)$$

FIG 4B

$$P(\vec{\mu}, \vec{\sigma}) \leq 0, \vec{x} \in B(\mu, \sigma)$$

**European Patent Office**
Europäisches Patentamt
European Patent Office
Office européen des brevets

## EUROPEAN SEARCH REPORT

Application Number

EP 10 00 8152

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Alexander Shapiro and Darinka Dentcheva and Andrzej Ruszczynski: "Lectures on Stochastic Programming", 8 October 2009 (2009-10-08), Society for Industrial and Applied Mathematics and the Mathematical Programming Society, XP002649637, ISBN: 978-0-898716-87-0 * Section 1.2, 4.1 * | 1-15 | INV. G05B13/04 ADD. G06Q10/00 |
| X | Patrick N. Koch and Brett Wujek and Oleg Golovidov and Timothy W. Simpson: "Facilitating Probabilistic Multidisciplinary Design Optimization using Kriging Approximation Models", 9th AIAA/ISSMO Symposium on Multidisciplinary Analysis and Optimization, no. AIAA 2002-5415 4 September 2002 (2002-09-04), 6 September 2002 (2002-09-06), pages 1-11, XP002649638, Retrieved from the Internet: URL:http://aircraftdesign.nuaa.edu.cn/MDO/ref/Uncertainty/Six%20Sigma/AIAA-2002-5415.pdf [retrieved on 2011-07-08] * page 1 - page 7 * | 1-15 | |
| A | ANDRZEJ RUSZCZYNSKI: "A Linearization Method for Nonsmooth Stochastic Programming Problems", MATHEMATICS OF OPERATIONS RESEARCH, vol. 12, no. 1, 1 February 1987 (1987-02-01), pages 32-49, XP008139427, DOI: 10.1287/moor.12.1.32 * page 32 - page 33 * | 1-15 | TECHNICAL FIELDS SEARCHED (IPC) G05B |

-/--

The present search report has been drawn up for all claims

| Place of search | Date of completion of the search | Examiner |
|---|---|---|
| The Hague | 13 July 2011 | Bassi, Luca |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches Patentamt

European Patent Office

Office européen des brevets

**EUROPEAN SEARCH REPORT**

Application Number

EP 10 00 8152

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | David L. Olson and Scott R. Swenseth: "A Linear Approximation for Chance-Constrained Programming", The Journal of the Operational Research Society, vol. 38, no. 3 1 March 1987 (1987-03-01), pages 261-267, XP002649639, Retrieved from the Internet: URL:http://cbafiles.unl.edu/public/cbainternal/facStaffUploads/jors87.pdf [retrieved on 2011-07-11] * abstract * ----- | 1-15 | |
| A | ZHIGUAN QIAN AND CAROLYN CONNER SEEPERSAD AND V. ROSHAN JOSEPH AND JANET K. ALLEN AND C. F. JEFF WU: "Building Surrogate Models Based on Detailed and Approximate Simulations", TRANSACTIONS OF THE ASME, vol. 128, 1 July 2006 (2006-07-01), pages 668-675, XP008139428, DOI: 10.1115/1.2179459 * the whole document * ----- | 1-15 | |
| A | SIMPSON T W ET AL: "Metamodels for computer-based engineering design: survey and recommendations", ENGINEERING WITH COMPUTERS, SPRINGER, BERLIN, DE, vol. 17, no. 2, 1 January 2001 (2001-01-01), pages 129-150, XP002402392, ISSN: 0177-0677 * the whole document * ----- -/-- | 1-15 | TECHNICAL FIELDS SEARCHED (IPC) |

The present search report has been drawn up for all claims

| Place of search | Date of completion of the search | Examiner |
|---|---|---|
| The Hague | 13 July 2011 | Bassi, Luca |

EPO FORM 1503 03.82 (P04C01)

Europäisches
Patentamt
European
Patent Office
Office européen
des brevets

## EUROPEAN SEARCH REPORT

Application Number

EP 10 00 8152

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | MARK ZLOCHIN ET AL: "Model-Based Search for Combinatorial Optimization: A Critical Survey", ANNALS OF OPERATIONS RESEARCH, KLUWER ACADEMIC PUBLISHERS, BO, vol. 131, no. 1-4, 1 October 2004 (2004-10-01), pages 373-395, XP019204224, ISSN: 1572-9338, DOI: DOI:10.1023/B:ANOR.0000039526.52305.AF * the whole document * ----- | 1-15 | |

TECHNICAL FIELDS
SEARCHED (IPC)

The present search report has been drawn up for all claims

| Place of search | Date of completion of the search | Examiner |
|---|---|---|
| The Hague | 13 July 2011 | Bassi, Luca |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
...........................................................................................
& : member of the same patent family, corresponding document

EPO FORM 1503 03.82 (P04C01)